(19) Europäisches Patentamt
European Patent Office
Office européen des brevets

(11) **EP 1 427 627 B1**

(12) **EUROPÄISCHE PATENTSCHRIFT**

(45) Veröffentlichungstag und Bekanntmachung des Hinweises auf die Patenterteilung:
**21.11.2007 Patentblatt 2007/47**

(21) Anmeldenummer: **02772246.1**

(22) Anmeldetag: **30.08.2002**

(51) Int Cl.:
**B62D 29/04** *(2006.01)*     **B60J 7/04** *(2006.01)*

(86) Internationale Anmeldenummer:
**PCT/EP2002/009720**

(87) Internationale Veröffentlichungsnummer:
**WO 2003/022664 (20.03.2003 Gazette 2003/12)**

(54) **HOHLPROFILVERBUNDBAUTEILE**

HOLLOW PROFILED COMPOSITE COMPONENTS

COMPOSANTS COMPOSITES PROFILES CREUX

(84) Benannte Vertragsstaaten:
**AT BE BG CH CY CZ DE DK EE ES FI FR GB GR IE IT LI LU MC NL PT SE SK TR**

(30) Priorität: **05.09.2001 DE 10143564**

(43) Veröffentlichungstag der Anmeldung:
**16.06.2004 Patentblatt 2004/25**

(73) Patentinhaber: **BASF Aktiengesellschaft 67056 Ludwigshafen (DE)**

(72) Erfinder:
• **JAKOBI, Reinhard**
  **67133 Maxdorf (DE)**
• **SEIB, Wolfgang**
  **67125 Dannstadt-Schauernheim (DE)**
• **HOPFENSPIRGER, Xaver**
  **67454 Hassloch (DE)**
• **KESSLER, Andreas**
  **69115 Heidelberg (DE)**
• **WOLF, Uwe**
  **82319 Starnberg (DE)**

(56) Entgegenhaltungen:
**EP-A- 1 245 478          DE-A- 19 928 774**
**JP-A- 56 144 956**

• **PATENT ABSTRACTS OF JAPAN vol. 1995, no. 01, 28. Februar 1995 (1995-02-28) & JP 06 278660 A (MAZDA MOTOR CORP), 4. Oktober 1994 (1994-10-04)**
• **PATENT ABSTRACTS OF JAPAN vol. 014, no. 506 (M-1044), 6. November 1990 (1990-11-06) & JP 02 208175 A (SUZUKI MOTOR CO LTD), 17. August 1990 (1990-08-17)**

**Beschreibung**

Die vorliegende Erfindung betrifft Hohlprofilverbundbauteile, ein Verfahren zu deren Herstellung und deren Verwendung als Deckelelement oder Dachlamelle in einem Dachmodul, Motorhaube, Heckklappe, Rasenmäherhaube, Türbeplankung oder Serviceklappe.

Dachfenster bzw. Schiebedächer in Kraftfahrzeugen erfreuen sich zunehmender Popularität, wobei ein Trend in Richtung auf immer größere Dachöffnungen zu erkennen ist. Diese Dachöffnungen werden sowohl breiter als auch länger und erstrecken sich bei einigen Modellen wie der A-Klasse von DaimlerChrysler bis zur hinteren Dachkante. Neben großflächigen Dachfenstern gibt es mittlerweile solche aus zwei bis drei Dachmodulen bestehende Fahrzeugdächer sowie so genannte Lamellendächer, bei denen eine Vielzahl von öffnungsfähigen Deckelelementen oder Lamellen eine geschlossene Dachfläche bilden. Insofern Schiebedächer, insbesondere mehrteilige Schiebedächer eine komplexe Schließ-, Arretier- und Verstellmechanik erfordern, steht der Fachmann häufig vor dem Problem, eine auf Dachmodule zurückgehende Zunahme des Fahrzeuggewichts möglichst zu vermeiden, um einerseits den Treibstoffverbrauch niedrig halten zu können und andererseits den Fahrzeugschwerpunkt möglichst tief zu legen.

Aus diesem Grund greift man seit einiger Zeit verstärkt auf Dach- bzw. Deckelelemente aus Kunststoff zurück (s.a. DE-A 195 12 260). Diese haben jedoch gegenüber Dachelementen aus Metall oder Glas den Nachteil einer wesentlich größeren Wärmeausdehnung. Des weiteren ist bei Dachmodulen zu beachten, dass bei höheren Geschwindigkeiten sehr hohe Sogkräfte auftreten können, die insbesondere bei Kunststoffleichtbauelementen zu einer nicht unerheblichen Deformierung führen und gegebenenfalls sogar das Bauteil aus seiner Arretierung lösen können. Um hierauf zurückgehende Undichtigkeiten oder dauerhafte Auswölbungen zu vermeiden sowie um das mechanische Eigenschaftsprofil von Kunststoffdachmodulen zu verbessern, ist gemäß DE-A 100 01 964 ein unter dem Kunststoffdachelement umlaufender Metallrahmen vorzusehen. Bei der Kombination aus umlaufendem Metallrahmen und Kunststoffdachmodul stellt sich jedoch gleichfalls das Problem des unterschiedlichen Wärmeausdehnungsverhaltens, weswegen in der DE-A 16 55 527 vorgeschlagen wird, die Deckelplatte aus Kunststoff in Längsrichtung der Querverstärkung aus Metall verschiebbar zu lagern. Gemäß DE-A 100 01 964 kann der Verstärkungsrahmen aus mindestens zwei Einzelelementen bestehen, die auf mehreren Lagerstellen aufliegen und gegeneinander verschiebbar sind. Diese Ausführungsformen bringen zwangsläufig einen erhöhten konstruktiven Aufwand mit sich.

In der DE-A 197 16 390 wird ein Kunststoffdeckel für ein Fahrzeugschiebedach beschrieben, bei dem zwecks Stabilisierung und Versteifung ein umlaufender Dichtungsträger in Form einer Hohlkammer einstückig mit dem Deckel verbunden ist. Bei dieser Konstruktion wird zwar der Randbereich versteift, insbesondere bei großflächigen Dachmodulen trägt diese konstruktive Maßnahme jedoch wenig oder gar nichts zur Gesamtstabilität bei.

Um den ästhetischen Gesamteindruck von Fahrzeugdächern aus Kunststoff nicht durch umlaufende Verstärkungselemente aus Metall zu beeinträchtigen, wird regelmäßig ein separater, an der Dachmodulinnenseite befestigter Dachhimmel vorgesehen. Ein solcher Dachhimmel hat daneben auch die Funktion, insbesondere bei Lamellendächern, durch die Zwischenräume der Lamellen eindringende Feuchtigkeit zurückzuhalten und in geeigneter Weise abzuleiten (s.a. DE-A 197 56 021). Dieser Dachhimmel hat demgemäß aus einem Material zu bestehen, das sowohl den ästhetischen Anforderungen genügt als auch wasserundurchlässig ist. Des weiteren stellt sich bei Verwendung von Dachhimmeln bei Lamellendächern das Problem, dass aufgrund der unterschiedlichen Wärmeausdehnung von Lamelle und Fahrzeughimmel Faltenbildung bzw. Faltenwurf stattfinden kann. Gemäß DE-A 198 03 597 kann dieses durch die Wahl geeigneter beweglicher Befestigungsmittel unterbunden werden.

In JP 06 278 660 A wird eine wabenförmige Struktur aus Kunstharz beschrieben, die einseitig mit einer Deckschicht beschichtet ist.

Deckelelemente bzw. Dachlamellen oder -module haben als Bestandteil der Karosserieaußenfläche nicht nur dicht zu sein und mechanischen Anforderungen zu genügen, sondern auch eine hochwertige Oberfläche, z.B. hinsichtlich Beschaffenheit und Farbe, aufzuweisen. Dieser Aspekt kann zwar mit Deckelelementen oder Dachlamellen aus Metall ohne weiteres erfüllt werden, scheitert jedoch bei Kunststoffaußenbauteilen in der Regel bereits daran, dass diese nicht on-line lackierbar sind.

Bei Bauteilen aus Kunststoff, insbesondere bei faserverstärkten Bauteilen bereitet zudem häufig das Phänomen des Verzugs weitere Schwierigkeiten. Vor allem bei spritzgegossenen Bauteilen wird Verzug, d.h. die irreversible Verformung nach der Entnahme aus dem Formwerkzeug relativ häufig beobachtet und ist daher bei der Werkzeugauslegung entsprechend zu berücksichtigen. Verzug entsteht in der Regel durch örtlich unterschiedliche Schwindung des sich abkühlenden Kunststoffs und kann z.B. zurückgeführt werden auf das Vorliegen unterschiedlicher Wanddicken, beispielsweise bei Wanddickensprüngen, auf die Verwendung unterschiedlicher Materialien, die Beimengung von Füllstoffen oder auf anisotrope Eigenschaften in Fließrichtung und senkrecht dazu. Häufig tritt Verzug auch bei Verbundbauteilen, z.B. folienhinterspritzten Systemen auf, insbesondere auch dann, wenn eine Komponente des Verbundsystems, in der Regel die Folie, unverstärkt und die andere Komponente, in der Regel der hinterspritzte Kunststoff, faserverstärkt vorliegen. Dadurch, dass sich die Folie bei Temperaturerhöhung üblicherweise stärker ausdehnt als die hinterspritzte Substratschicht, wird häufig bereits nach dem Auskühlen des frisch hergestellten Verbundbauteils eine Verformung, z.B in Form einer Aufwölbung oder Abflachung des gesamten Bauteils beobachtet.

Des weiteren lässt sich vielfach eine reversible temperaturabhängige Verformung bei den vorgenannten Bauteilen nicht unterbinden. Die auftretenden Längenänderungen und/oder Auswölbungen werden nicht nur optisch als störend empfunden, sondern führen zu Bauteilen, die als Dichtelemente nicht mehr geeignet sind. Beispielsweise können Dachlamellen oder -module aus solchen Verbundsystemen in Waschstraßen oder bei Regengüssen Feuchtigkeit aus dem Karosserieinnenraum nicht immer zurückhalten. Um diesen temperaturabhängigen Verformungstendenzen entgegenzuwirken, bedient man sich daher beispielsweise besonders stabil ausgelegter Befestigungselemente, die jedoch einen konstruktiven Mehraufwand und ein höheres Gewicht mit sich bringen und die Bewegungsfreiheit der einzelnen Module einschränken.

Es wäre daher wünschenswert, auf Deckelelemente oder Dachlamellen bzw. -module zurückgreifen zu können, welche die vorgehend beschriebenen Nachteile nicht aufweisen.

Der Erfindung lag daher die Aufgabe zugrunde, Deckelelemente bzw. Dachlamellen oder -module mit einer geringen Verzugsneigung und einer geringen reversiblen Wärmeausdehnung bzw. Verformung zur Verfügung zu stellen, die zudem ein geringes Eigengewicht aufweisen, formstabil sind und eine einfache Montage gestatten.

Demgemäß wurde ein Hohlprofilverbundbauteil, umfassend mindestens einen Verbundformkörper (A), umfassend eine Folienschicht (A1) und ein hinterspritztes Kunststoffmaterial (A2), und mindestens einen Kunststoffformkörper (B), bei dem der Kunststoffformkörper (B) über mindestens zwei Rippen oder mindestens eine umlaufende Rippe mit dem hinterspritzten Kunststoffmaterial (A2) verbunden ist, gefunden.

In einer bevorzugten Ausführungsform stellt das Hohlprofilverbundbauteil ein vollständig geschlossenes Hohlprofil dar.

Für die Folienschicht (A1) kommen sowohl ein- als auch zwei- oder mehrschichtige Folien in Frage. Bevorzugt wird auf zwei- oder mehrschichtige Folien, d.h. auf Verbundschichtfolien zurückgegriffen. Geeignete Einschichtfolien werden z.B. aus Mischungen aus Polyamiden und Polyethylenionomeren, z.B. Ethen/Methacrylsäure-Copolymeren enthaltend beispielsweise Natrium-, Zink- und/oder Lithiumgegenionen (u.a. unter der Handelsmarke Surlyn® der Firma DuPont erhältlich) oder aus Copolyestern gebildet. Es können aber auch alle weiteren gängigen Einschichtfolien wie PVC-, ABS-, ASA-, Polyester- oder Polycarbonat-Folien eingesetzt werden.

Besonders geeignet sind Verbundschichtfolien, die sich zusammensetzen aus, in dieser Reihenfolge, mindestens einer Substratschicht (1), gegebenenfalls mindestens einer Zwischen- oder Dekorschicht (2), und mindestens einer transparenten Deckschicht (3).

Die Substratschicht (1) enthält üblicherweise thermoplastische Polymerisate wie ASA-Polymerisate, ABS-Polymerisate, Polycarbonate, Polyester wie Polyethylenterephthalat oder Polybutylenterephthalat, Polyamide, Polyetherimide, Polyetherketone, Polyphenylensulfide, Polyphenylenether oder Mischungen dieser Polymeren. Bevorzugt werden für die Substratschicht ASA-Polymerisate eingesetzt. Geeignete Blends enthalten ASA-Polymerisate und Polycarbonate, ABS-Polymerisate und Polycarbonate, ASA-Polymerisate und Polybutylenterephthalat, ABS-Polymerisate und Polybutylenterephthalat oder ABS-Polymerisate und Polyamide.

Unter ASA-Polymerisate werden im allgemeinen schlagzähmodifizierte Styrol/Acrylnitril-Polymerisate verstanden, bei denen Pfropfcopolymerisate von vinylaromatischen Verbindungen, insbesondere Styrol, und Vinylcyaniden, insbesondere Acrylnitril, auf Polyalkylacrylatkautschuken in einer Copolymermatrix aus insbesondere Styrol und Acrylnitril vorliegen. Im Handel sind ASA-Polymerisate z.B. unter dem Namen Luran® (BASF AG) erhältlich.

Geeignete Polycarbonate sind an sich bekannt. Besonders bevorzugte Polycarbonate sind solche auf der Basis Resorcinol bzw. Resorcinolarylaten sowie auf der Basis von Bisphenol A oder Bisphenol A zusammen mit bis zu 80 Mol-% an weiteren aromatischen Dihydroxyverbindungen. Kommerziell erhältlich sind z.B. die Polycarbonate Makrolon® (Bayer AG) und Lexan® (GE Plastics B.V.). Es kommen auch Copolycarbonate auf der Basis von Bisphenol A und z.B. Bis-(3,5-dimethyl-4-hydroxyphenyl)sulfon bzw. 1,1-Di-(4-hydroxyphenyl)-3,3,5-trimethyl-cyclohexyl, die sich durch eine hohe Wärmeformbeständigkeit auszeichnen, in Frage. Letztgenanntes Copolycarbonat ist kommerziell unter dem Handelsnamen Apec® (Bayer AG) erhältlich. Die Polycarbonate können sowohl als Mahlgut als auch in granulierter Form eingesetzt werden. Als Mischungsbestandteil, insbesondere in einer ASA-Substratschicht, liegen Polycarbonate üblicherweise in Mengen von 0 bis 80 Gew.-%, bevorzugt 20 bis 70 Gew.-%, bezogen auf die gesamte Formmasse, vor. Der Zusatz von Polycarbonaten führt unter anderem zu höherer Thermostabilität und verbesserter Rissbeständigkeit der Verbundschichtfolien.

Anstelle von ASA-Polymerisaten bzw. deren Blends mit Polycarbonaten oder auch zusätzlich zu diesen kann die Substratschicht (1) auch aufgebaut sein aus ABS-Polymerisaten (hierbei handelt es sich u.a. um schlagzähmodifizierte Styrol/Acrylnitril-Polymerisate, bei denen Pfropfcopolymerisate von Styrol und Acrylnitril auf Polybutadienkautschuken in einer Copolymermatrix aus Styrol und Acrylnitril vorliegen), Mischungen aus Poly(meth)acrylaten und SAN-Polymerisaten, die mit Polyacrylatkautschuken schlagzäh modifiziert sind, z.B. Terlux® (BASF AG), Polycarbonaten, Polyestern wie Polybutylenterephthalat (PBT) (z.B. Ultradur®, BASF AG) oder Polyethylenterephthalat (PET), Polyamiden (Ultramid®, BASF AG), Polyetherimiden (PEI), Polyetherketonen (PEK), Polyphenylensulfiden (PPS), Polyphenylenethern oder Blends dieser Polymere. Die vorgenannten Polymerwerkstoffe sind im allgemeinen bekannt und finden sich beispielsweise in H. Domininghaus, Die Kunststoffe und ihre Eigenschaften, VDI-Verlag, Düsseldorf (1992), beschrieben.

In einer bevorzugten Ausführungsform wird die Substratschicht (1) aus ASA-Polymerisaten, Mischungen aus ASA-Polymerisaten und Polycarbonaten, aus ABS-Polymerisaten, Polycarbonaten, Polybutylenterephthalat, Polyethylenterephthalat, Polyamiden oder Blends aus ASA-Polymerisaten und Polybutylenterephthalat gebildet. Besonders bevorzugt enthält die Substratschicht (1) eine Formmasse aus ASA-Polymerisaten oder Mischungen aus ASA-Polymerisaten und Polycarbonaten. Sie kann auch im wesentlichen oder vollständig aus diesen Polymeren bestehen.

Die Schichtdicke der Substratschicht (1) beträgt vorzugsweise 100 bis 2000 $\mu$m, insbesondere 150 bis 1500 $\mu$m und besonders bevorzugt 200 bis 1000 $\mu$m.

Die Substratschicht (1) kann ferner als Zusatzstoffe solche Verbindungen enthalten, die für die beschriebenen (Co)polymerisate sowie deren Mischungen typisch und gebräuchlich sind. Als Zusatzstoffe seien beispielsweise genannt: Farbstoffe, Pigmente, Effektfarbmittel, Antistatika, Antioxidantien, Stabilisatoren zur Verbesserung der Thermostabilität, zur Erhöhung der Lichtstabilität oder zum Anheben der Hydrolyse- oder Chemikalienbeständigkeit, sowie insbesondere Schmier- und/oder Gleitmittel, die für die Herstellung von Formkörpern bzw. Formteilen zweckmäßig sind.

Die Verbundschichtfolien können des weiteren eine Zwischenschicht (2) aus thermoplastischen und/oder duroplastischen Kunststoffen, gegebenenfalls mit weiteren Zusatzstoffen, aufweisen. Die Zwischenschicht (2) wird auch als Farbträger- oder Dekorschicht eingesetzt. Geeignete thermoplastische Kunststoffe sind z.B. die Polyalkyl- und/oder -arylester der (Meth)acrylsäure, z.B. Polymethylmethacrylat, auch in schlagzäh modifizierter Form, Poly (meth)acrylamide oder Poly(meth)acrylnitril, auch Acrylharze genannt, des weiteren ABS-Polymerisate, Styrol/Acrylnitril-Polymerisate (SAN), Polycarbonate, Polyester, z.B. Polyethylen- oder Polybutylenterephthalat, Polyamide, insbesondere amorphes Polyamid, z.B. Polyamid 12, Polyethersulfone, thermoplastische Polyurethane, Polysulfone, Polyvinylchorid oder ASA-Polymerisate. Auch Blends der vorstehenden (Co)polymerisate sind geeignet, z.B. Mischungen aus ASA-Polymerisaten und Polycarbonaten, wie vorstehend für die Substratschicht (1) beschrieben. Auch thermoplastische Polyurethane, insbesondere witterungsbeständige aliphatische Polyurethane, z.B. das Handelsprodukt Elastollan$^®$ (Fa. Elastogran, Lemförde) (s.a. Kunststoff-Handbuch, Polyurethane, Band 7, 2. Aufl., Carl Hanser Verlag, München, 1983, Seiten 31 bis 39), kommen als Folienwerkstoffe in Betracht. Bevorzugt wird auf Acrylharze, Polycarbonate und/ oder Styrol(co) polymere zurückgegriffen.

Die Zwischenschicht ist bevorzugt aus Polymethylmethacrylat, schlagzähem Polymethylmethacrylat (PMMA), Polycarbonaten oder den vorstehend für die Substratschicht (1) beschriebenen ASA-Polymerisaten oder deren Blends mit Polycarbonaten aufgebaut.

Geeignete schlagzäh modifizierte Poly(meth)acrylate sind beispielsweise beschrieben bei M. Stickler, T. Rhein in Ullmann's encyclopedia of industrial chemistry Vol. A21, Seiten 473-486, VCH Publishers Weinheim, 1992, und H. Domininghaus, Die Kunststoffe und ihre Eigenschaften, VDI-Verlag Düsseldorf, 1992. Polymethylmethacrylate sind dem Fachmann im übrigen bekannt und z.B. unter den Handelsmarken Lucryl$^®$ (eingetragene Marke der BASF AG) und Plexiglas$^®$ (Röhm GmbH) erhältlich.

Als Dekorschicht kann die Zwischenschicht (2) über Effektfarbmittel verfügen. Dieses sind beispielsweise Farbstoffe, Effektfarbmittel, Metallflocken oder Pigmente. Als Farbstoffe oder Pigmente kommen organische oder anorganische Verbindungen in Betracht. Als organische Pigmente seien Bunt-, Weiß- und Schwarzpigmente (Farbpigmente) sowie Flüssigkristallpigmente genannt. Als anorganische Pigmente sind ebenfalls Farbpigmente sowie Glanzpigmente und die üblicherweise als Füllstoffe eingesetzten anorganischen Pigmente geeignet.

In einer weiteren Ausführungsform verfügt die Substratschicht (1) - alleine oder zusammen mit einer gegebenenfalls vorliegenden Zwischenschicht (2) - über die vorgehend genannten Effektfarbmittel.

Die Schichtdicke der Dekorschicht (2) liegt im allgemeinen im Bereich von 10 bis 1000, bevorzugt von 50 bis 500 und besonders bevorzugt von 100 bis 400 $\mu$m.

Die Deckschicht (3) ist in der Regel transluzent, bevorzugt transparent. Sie setzt sich zusammen aus Poly (meth)acrylatpolymerisaten, schlagzähem Poly(meth)acrylat, insbesondere schlagzähem Polymethylmethacrylat, Fluor (co)polymeren wie Polyvinylidenfluorid (PVDF), ABS-Polymerisaten, Polycarbonaten, Polyethylenterephthalat, amorphem Polyamid, Polyethersulfonen, Polysulfonen oder SAN-Copolymerisaten oder deren Mischungen. Insbesondere enthält die Deckschicht Polymethylmethacrylat, schlagzähes Polymethylmethacrylat oder Polycarbonate, bevorzugt Polymethylmethacrylat, schlagzähes Polymethylmethacrylat, PVDF oder deren Mischungen. Die Polymere bzw. deren Mischungen werden in der Regel so gewählt, dass sie zu einer transparenten Deckschicht führen.

In einer weiteren Ausführungsform geht die Deckschicht zurück auf eine strahlungshärtbare Masse, die ionisch sowie insbesondere radikalisch härtbare funktionelle Gruppen enthält. Die radikalisch strahlungshärtbare Deckschicht enthält bevorzugt i) Polymere mit ethylenisch ungesättigten Gruppen oder ii) Mischungen dieser Polymere mit ethylenisch ungesättigten niedermolekularen Verbindungen oder iii) Mischungen aus thermoplastischen Polymeren ohne ethylenisch ungesättigte Gruppen mit ethylenisch ungesättigten Verbindungen.

Als ethylenisch ungesättige Gruppen im Polymer i) kann z.B. auf Maleinsäure, Fumarsäure, Maleinsäureanhydrid oder (Meth)acrylsäurereste zurückgegriffen werden. Geeignete Polymere i) können auf polyestern, Polyethern, Polycarbonaten, Polyepoxiden oder Polyurethanen basieren.

Als ethylenisch ungesättigte niedermolekulare Verbindungen kommen beispielsweise Alkyl(meth)acrylate wie Methylmethacrylat, Methylacrylat, n-Butylacrylat, Ethylarcrylat oder 2-Ethylhexylacrylat, Vinylaromate wie Vinyltoluol oder Styrol, Vinylester wie Vinylstearat oder Vinylacetat, Vinylether wie Vinylmethylether, Acrylnitril oder Methacrylnitril in Frage.

Geeignete gesättigte thermoplastische Polymere stellen z.B. Polymethylmethacrylat, schlagfestes Polymethylmethacrylat, Polystyrol, schlagfestes Polystyrol (HIPS), Polycarbonat oder Polyurethane dar.

Die strahlungshärtbare Masse kann als weitere Bestandteile Photoinitiatoren, Verlaufsmittel oder Stabilisatoren, z.B. UV-Absorber und Radikalfänger, enthalten.

Die Strahlungshärtung der Deckschicht erfolgt mit energiereicher Strahlung, z.B. UV-Licht oder Elektronenstrahlung, gegebenenfalls bei erhöhten Temperaturen.

Wegen weiterer Details hinsichtlich der Zusammensetzung der strahlungshärtbaren Deckschicht sowie deren Herstellung wird hiermit ausdrücklich auf die WO 00/63015 verwiesen.

Des weiteren kann sich eine Haftschicht aus einem Haftvermittler mit einer Schichtdicke von im allgemeinen 5 bis 400, insbesondere 5 bis 100 μm an die äußere Fläche der Substratschicht anschließen. Der Haftvermittler dient dazu, eine feste Verbindung mit einem gewählten Substrat herzustellen, das unter der Substratschicht zu liegen kommt (beispielsweise durch Hinterspritzen). Die Haftschicht wird dann verwendet, wenn die Haftung dieses weiteren Substrats mit der Substratschicht unzureichend ist (beispielsweise bei Polyolefinsubstraten). Geeignete Haftvermittler sind dem Fachmann bekannt. Beispiele geeigneter Haftvermittler sind Ethylen-Vinylacetat-Copolymere zur Kopplung an Polyethylen und Maleinsäureanhydrid-gepfropfte Polypropylene zur Kopplung an Polypropylen. In beiden Fällen wird nach gängiger Meinung die Haftung durch das Einbringen polarer Gruppen in die unpolaren Polyolefine erreicht.

Die Verbundschichtfolien werden u.a. durch Adapter- oder Düsencoextrusion der Komponenten, vorzugsweise in einem einstufigen Prozess, hergestellt. Die Düsencoextrusion findet sich z.B. in der EP-A2-0 225 500 erläutert, das Adaptercoextrusionsverfahren in dem Tagungsband der Fachtagung Extrusionstechnik "Coextrusion von Folien", 8./9. Oktober 1996, VDI-Verlag Düsseldorf, insbesondere in dem Beitrag von Dr. Netze. Weiterhin können die Verbundschichtfolien durch Aufeinanderkaschieren der einzelnen Folienschichten in einem beheizbaren Spalt hergestellt werden. Eine Dreischichtfolie kann aber auch ausgehend von einer Verbundschichtfolie aus den zwei Schichten (2) und (3) hergestellt werden, indem diese nachträglich mit einer Substratschicht (1) versehen wird.

Des weiteren kann man eine Schutzschicht, z.B. aus einer Polyethylenfolie, vorzugsweise temporär auf eine Oberfläche der Folienschicht (A1) aufbringen. Vorteilhafterweise kaschiert man die Schutzschicht mittels bekannter Laminier- bzw. Kaschierverfahren unmittelbar nach der Herstellung der Folienschicht (A1), z.B. nach der Coextrusion einer Mehrschichtfolie aus Substrat-, gegebenenfalls Dekor-, und Deckschicht, auf die noch warme Oberseite der Folie auf. Diese Schutzschicht kann zu jedem beliebigen Zeitpunkt der Fertigung oder Weiterverarbeitung des Hohlprofilverbundbauteils wieder entfernt werden, also z.B. auch vor oder nach dem Einbau des Hohlprofilverbundbauteils als Dachlamelle in ein Fahrzeugdach.

Die Ein-, Zwei-, Drei- oder Mehrschichtfolie kann als solche oder in tiefgezogener oder thermogeformter Form in das Formwerkzeug eingelegt werden. Es ist auch möglich, den Tiefzieh- oder Thermoformprozess erst im Hinterspritz- bzw. Hinterpresswerkzeug vorzunehmen. Des weiteren ist es möglich, die Oberfläche der Folie beim Hinterspritzen oder -pressen oder auch beim Tiefzieh- oder Thermoformvorgang durch die Wahl einer geeigneten Werkzeugoberfläche mit einer Dekorstruktur, z.B. einer Narbung, zu versehen. Diese Oberflächenstrukturierung kann selbstverständlich auch in einem separaten Schritt erfolgen.

Geeignete Kunststoffmaterialien (A2) für das Hinterspritzen der Folienschicht (A1) stellen alle bekannten thermoplastischen Formmassen dar.

Bevorzugt werden als Kunststoffmaterialien thermoplastische Formmassen auf der Basis von ASA-, ABS- oder SAN-Polymerisaten, Poly(meth)acrylaten, Polyethersulfonen, Polyamiden, Polybutylenterephthalat, Polycarbonaten, Polypropylen (PP) oder Polyethylen (PE) oder deren Mischungen eingesetzt. Bevorzugt als Blends sind Mischungen enthaltend ABS-Polymerisate und Polycarbonate, ABS-Polymerisate und Polybutylenterephthalat, ABS-Polymerisate und Polyamide sowie insbesondere Blends aus ASA-Polymerisat mit Polycarbonaten oder ASA-Polymerisat mit Polybutylenterephthalat sowie Polycarbonat/Polybutylenterephthalat-Mischungen.

Die genannten Kunststoffmaterialien sowie deren Mischungen können weitere übliche Hilfsstoffe aufweisen. Derartige Hilfsstoffe sind beispielsweise Gleit- oder Entformungsmittel, Wachse, Effektfarbmittel, z.B. Pigmente wie Titandioxid, oder Farbstoffe, Flammschutzmittel, Antioxidantien, Stabilisatoren, z.B. gegen Lichteinwirkung, oder Antistatika.

Das zum Hinterspritzen verwendete Kunststoffmaterial (A2) enthält in einer bevorzugten Ausführungsform Fasern und/oder Füllstoffe. Als teilchenförmige Füllstoffe kommen beispielsweise Ruß, Holzmehl, amorphe Kieselsäure, Magnesiumcarbonat, Aluminium-Flakes, gepulvertes Quarz, Glimmer, Mica, Bentonite, Talkum, Calciumcarbonat, Glaskugeln, Feldspat oder insbesondere Calciumsilikate wie Wollastonit und Kaolin in Frage.

Als Beispiele für geeignete Fasermaterialien seien Kohlenstoff-, Aramid-, Stahl- und Glasfasern, Schnittglas oder Glasseidenrovings genannt. Besonders bevorzugt sind Glasfasern. Des weiteren können als Fasern Naturfasern wie Flachs, Hanf, Jute, Sisal, Ramie oder Carnaf eingesetzt werden.

Die verwendeten Glasfasern können aus E-, A- oder C-Glas sein und sind vorzugsweise mit einer Schlichte und/oder einem Haftvermittler ausgerüstet. Ihr Durchmesser liegt im allgemeinen im Bereich von 6 bis 30, bevorzugt im Bereich von 10 bis 17 μm. Es können sowohl Endlosfasern (rovings) als auch Schnittglasfasern (staple), üblicherweise mit einer Länge von 1 bis 30 mm, bevorzugt mit einer Länge von 3 bis 15 mm, oder Kurzglasfasern mit einer Länge von in der Regel 0,2 bis 0,4 mm eingesetzt werden. Insbesondere wenn das Kunststoffmaterial ABS-Polymerisat enthält oder aus diesem besteht, werden Langglasfasern eingesetzt.

Geeignete Kunststoffmaterialien sind z.B. faserverstärktes ABS-Polymerisat oder eine faserverstärkte PBT/ASA-Mischung.

Die Fasern oder Füllstoffe liegen in dem Kunststoffmaterial (A2) im allgemeinen in einer Menge im Bereich von 3 bis 60 Gew.-%, bevorzugt von 10 bis 40 Gew.-%, bezogen auf das gesamte Formmassengewicht, vor.

Vorzugsweise erfolgt die Herstellung der folienhinterspritzten Verbundformkörper (A) in einem mehrstufigen Prozess durch a) Herstellen der Folienschicht (A1), insbesondere der Verbundschichtfolie mittels Laminierens oder mittels Adapter- oder Düsen(co)extrusion von Deck-, Substrat- und gegebenenfalls Zwischenschicht, wobei der gesamte Folienverbund entweder in einem einstufigen Prozess oder durch Aufeinanderlaminieren der Einzelschichten oder durch Aufbringen einer strahlungshärtbaren Deckschicht auf eine Ein- oder Mehrschichtfolie hergestellt wird, b) gegebenenfalls Thermoformen oder Tiefziehen der Verbundschichtfolie in einem Formwerkzeug und c) Hinterspritzen der Verbundschichtfolie mit einem vorzugsweise faser- oder füllstoffverstärkten Kunststoffmaterial (A2).

Das Hinterspritzen von Folien mit einem Thermoplasten ist dem Fachmann bekannt und findet sich z.B. in der WO 01/00382 beschrieben. Es sei an dieser Stelle klargestellt, dass der Begriff des Hinterspritzens im Sinne der vorliegenden Erfindung ausdrücklich auch die dem Fachmann ebenfalls bekannten Technologien des Hinterpressens, Hinterprägens und Hintergießens von Folien umfasst. Nur aus Gründen der besseren Übersicht wird vorliegend der Begriff des Hinterspritzens an die Stelle der Aufzählung von Hinterspritzen, Hinterpressen, Hinterprägen und Hintergießen gestellt. Die vorgenannten Techniken sind dem Fachmann bekannt (s.a. E. Bürkle, G. Rehm und P. Eyerer, "Hinterspritzen und Hinterpressen", Kunststoffe, 1996, 86 (3), S. 298 bis 307).

Für die Herstellung des Kunststoffformkörpers (B) kommen die vorgehend für das Kunststoffmaterial (A2) beschriebenen thermoplastischen Kunststoffe in Betracht. Geeignet sind demnach Formmassen auf der Basis von ASA-, ABS- oder SAN-Polymerisaten, Poly(meth)acrylaten, Polyethersulfonen, Polyamiden, Polybutylenterephthalat, Polycarbonaten, Polypropylen (PP) oder Polyethylen (PE) oder deren Mischungen. Bevorzugt wird auf ASA-Polymerisate, Polybutylenterephthalat, Polycarbonate oder deren Mischungen, insbesondere Mischungen enthaltend ABS-Polymerisate und Polycarbonate, ABS-Polymerisate und Polybutylenterephthalat, ABS-Polymerisate und Polyamide sowie bevorzugt Blends aus ASA-Polymerisat mit Polycarbonaten oder ASA-Polymerisat mit Polybutylenterephthalat oder Polycarbonat/Polybutylenterephthalat-Mischungen für die Kunststoffformkörper (B) zurückgegriffen.

In einer bevorzugten Ausführungsform enthält der Kunststoffformkörper (B) Fasern und/oder Füllstoffe. Als Fasern und Füllstoffe kommen solche Materialien in Betracht, die bereits für das Kunststoffmaterial (A2) beschrieben worden sind. Allgemeine und bevorzugte Angaben gelten für (B) entsprechend.

In einer weiteren, bevorzugten Ausführungsform liegen Fasern und/oder Füllstoffe sowohl in der Hinterspritzschicht aus dem Kunststoffmaterial (A2) als auch in dem Kunststoffformkörper (B) vor. Es ist vorteilhaft, wenn die Fasern und Füllstoffe in der Hinterspritzschicht aus dem Kunststoffmaterial (A2) und/oder in dem Kunststoffformkörper (B) im wesentlichen gleichmäßig verteilt sind.

In einer besonders bevorzugten Ausführungsform ist der Gewichtsanteil an Fasern und Füllstoffen im Kunststoffformkörper (B) niedriger als im hinterspritzten Kunststoffmaterial (A2), jeweils bezogen auf das Gesamtgewicht von Kunststoffformkörper (B) bzw. hinterspritztem Kunststoffmaterial (A2). Bevorzugt wird der Faser- bzw. Füllstoffgehalt (in Gew.-%, bezogen auf das Gesamtgewicht von Kunststoffformkörper (B)) im Kunststoffformkörper (B) gemäß der nachfolgenden Formel (I) eingestellt:

$$FG(B) = FG(A2) \times t(A2)/[t(A1) + t(A2)] \qquad (I),$$

worin

$FG(B)$ für den durchschnittlichen Faser- bzw. Füllstoffgehalt in Gew.-%, bezogen auf das Gesamtgewicht des Kunststoffformkörpers (B),

$FG(A2)$ für den durchschnittlichen Faser- bzw. Füllstoffgehalt in Gew.-%, bezogen auf das Gesamtgewicht des hinterspritzten Kunststoffmaterials (A2),

$t(A1)$ für die durchschnittliche Dicke der Folie (A1) im Verbundbauteil (A) und

$t(A2)$ für die durchschnittliche Dicke der hinterspritzten Kunststoffmaterialschicht (A2) im Verbundbauteil (A)

stehen.

Selbstverständlich liegt die vorgehend beschriebene bevorzugte Ausführungsform nicht nur dann vor, wenn die Gleichung (I) exakt erfüllt ist. Vielmehr wird der Fachmann auch Werte, die im näheren Bereich des exakt ermittelten Wertes FG(B) liegen, als unter die bevorzugte Ausführungsform fallend betrachten. Insbesondere können auch die Rippenhöhe, d.h. der Abstand zwischen der hinterspritzten Kunststoffmaterialschicht (A2) und der dieser zugewandten Grundfläche des Kunststoffformkörpers (B), sowie die Dicke des Kunststoffformkörpers (B) (ohne Einbeziehung der Rippenhöhe) zumindest einen geringen Einfluss auf das optimale Faser-/Füllstoffgehaltverhältnis haben. Je kleiner die Rippenhöhe bzw. je kleiner die Dicke des Kunststoffformkörpers (B), desto kleiner ist im allgemeinen der Anteil an Fasern bzw. Füllstoffen im Bauteil (B) gegenüber dem Anteil in der Materialschicht (A2) zu wählen, um die temperaturabhängige reversible Verformung möglichst gering zu halten. Folglich sind in solchen Fällen auf jeden Fall auch Werte für FG(B) von der Formel (I) umfasst, die unterhalb des exakt ermittelten Wertes liegen. Selbstverständlich sind auch solche Werte von der Formel (I) umfasst, die oberhalb der exakt ermittelten Werte liegen. Abweichungen von $\pm$ 30%, insbesondere $\pm$15% für FG(B) vom rechnerisch exakt ermittelten Wert führen regelmäßig ebenfalls zu einem besonders vorteilhaften Ergebnis.

Neben den genannten Fasern und Füllstoffen kann das Kunststoffmaterial für den Kunststoffformkörper (B) auch über die bereits für das Kunststoffmaterial (A2) beschriebenen üblichen Hilfsstoffe verfügen.

In einer weiteren Ausführungsform kann die die Außenseite des Hohlprofilverbundbauteils bildende Fläche des Kunststoffformkörpers (B) bei dessen Herstellung oder auch nachträglich mit einem Dekor, z.B. einer Kunststofffolie, Leder oder Textil versehen werden. Wird der Kunststoffformkörper (B) mittels Spritzguss hergestellt, kann man das Dekormaterial wie Leder oder Textil, gegebenenfalls geschützt durch eine Vlies- oder Schaumstoffschicht, in das Spritzgusswerkzeug einlegen und sodann hinterspritzen. In gleicher Weise können auch die vorgehend für den Verbundformkörper (A) beschriebenen Ein- oder Mehrschichtfolien als Dekormaterial für den Kunststoffformkörper (B) verwendet werden. Des weiteren ist es möglich, eine Werkzeugformseite mit einer Narbung oder einem Muster zu versehen, das sich beim Spritzgießen direkt in die Oberfläche des Kunststoffformkörpers (B) abbildet. Man gelangt auf diese Weise zu Dachmodulen, die bereits mit einem optisch ansprechenden Dachhimmel ausgestattet sind.

Der Kunststoffformkörper (B) kann über gängige Verfahren wie das Spritzgießen erhalten werden. Üblicherweise werden die Spritzgießwerkzeuge derart ausgelegt, dass sie bereits Vertiefungen für die anzuformenden Rippen aufweisen. Auf diese Weise kann in einem Arbeitsgang der Kunststoffformkörper (B), der über mindestens zwei einstückig angeformte Rippen oder mindestens eine einstückig angeformte umlaufende Rippe verfügt, hergestellt werden. Selbstverständlich ist es auch möglich, diese Rippen, die im allgemeinen auch als Stege bezeichnet werden können, separat herzustellen und nachträglich über bekannte Verbindungstechniken wie Kleben, z.B. mit Polyurethan- oder Epoxidklebern, oder mittels bekannter Schweißtechniken wie Vibrations-, Ultraschall-, Heizelement- oder Laserschweißen, mit dem Kunststoffformkörper zu verbinden. Werden die Rippen unmittelbar beim Spritzgießen des Kunststoffformkörpers (B) mit hergestellt, hat es sich als vorteilhaft erwiesen, bei der Konstruktion der Rippen eine Entformungsschräge zu berücksichtigen, um ein Ab- oder Ausbrechen von Rippensegmenten beim Entformvorgang aus dem Spritzgießwerkzeug zu vermeiden.

Die Rippen bzw. Stege können selbstverständlich auch auf der Seite des hinterspritzten Kunststoffmaterials (A2) vorgesehen werden. Beispielsweise kann das Hinterspritzwerkzeug Vertiefungen für die Rippen aufweisen, so dass bei der Herstellung des Verbundformkörpers (A) diese Rippen bereits einstückig angeformt werden. Des weiteren ist es ebenfalls möglich, die Rippen nach den vorgehend beschriebenen Verfahren auf die hinterspritzte Materialschicht (A2) aufzuschweißen oder aufzukleben.

In einer weiteren Ausführungsform weist diejenige Seite der einander im Hohlprofilverbundbauteil zugewandten Flächen von Kunststoffmaterialschicht (A2) und Kunststoffformkörper (B), auf der keine Rippen einstückig angebracht oder angeschweißt oder -geklebt sind, Fixier- bzw. Haltehilfen auf. Hierbei handelt es sich um Erhebungen, die nicht über die Rippenhöhe hinausgehen, in der Regel wesentlich niedriger sind als die Rippen und die ebenfalls die Form von Rippen haben können. Des weiteren können diese Erhebungen auch nur Rippenausschnitte oder bolzen- oder stiftartige Ausbuchtungen darstellen. Diese Erhebungen haben die Funktion, die gegenseitige Positionierung von Verbundformkörper (A) und Kunststoffformkörper (B) vor dem Zusammenfügen zu erleichtern bzw. zu optimieren und dienen somit als Fixier- bzw. Positionierhilfe.

Die erfindungsgemäßen Hohlprofilverbundbauteile erhält man üblicherweise dadurch, dass man an den Stellen, an denen die Rippenenden z.B. des Kunststoffformkörpers (B) auf der Oberfläche des hinterspritzten Kunststoffmaterials (A2) des Verbundformkörpers (A) zu Anlage gelangen, diese mit dem Kunststoffmaterial (A2) über die gesamte Auflagefläche, oder nur über Teile davon, verschweißt oder verklebt. Geeignete Schweißtechniken stellen das Vibrations-, Ultraschall-, Heizelement- oder Laserschweißen dar. Bevorzugt werden die Bauteile (A) und (B) vibrationsverschweißt, z.B. nach dem in der WO 97/17189 beschriebenen Verfahren.

Soll der Kunststoffformkörper (B) über seine Rippen mit dem hinterspritzten Kunststoffmaterial (A2) verklebt werden, hat es sich als vorteilhaft erwiesen, die Rippen über deren gesamte Länge, oder auch nur in Teilen, mit entsprechenden Klebeflanschen zu versehen, wodurch die Klebefläche nicht nur die Rippenkante, sondern eine wesentlich

**EP 1 427 627 B1**

breitere Klebefläche umfasst. Geeignete Kleber stellen z.B. handelsübliche Epoxid- und Polyurethankleber dar. Die zu verklebenden Flächen können in bekannter Weise zur Herstellung einer intensiveren Verbindung auch vorbehandelt werden, z.B. mittels Beflammung oder indem man zunächst einen Primer aufträgt.

Es hat sich insbesondere bei großflächigen Bauteilen als vorteilhaft herausgestellt, auf dem Kunststoffformkörper (B) eine Vielzahl an vorzugsweise im wesentlichen parallel verlaufenden Rippen vorzusehen. Die Rippen weisen in der Regel eine Höhe auf, die es ermöglicht, sämtliche Rippenoberkanten an der Oberfläche des Hinterspritzmaterials (A2) des Verbundformkörpers (A) zur Anlage zu bringen, d.h. der Rippenkantenverlauf bzw. die Rippenkontur ist dem Verlauf der hinterspritzten Kunststoffmaterialschicht (A2) an der jeweiligen Fügefläche nachgeformt.

Die Rippenzwischenräume können vor dem Zusammenfügen von Verbundformkörper (A) und Kunststoffformkörper (B) zwecks zusätzlicher Geräusch- oder Wärmedämmung mit einem Schaummaterial, z.B. mit Polyurethan-, Polypropylen- oder Polyethylenschaum, oder mit einem Fasermaterial wie Glaswolle ausgefüllt werden. Je nach Bedarf können sämtliche oder nur einzelne der Rippenzwischenräume mit den vorgenannten Materialien ausgefüllt werden.

Ein Ausschäumen der Rippenzwischenräume ist insbesondere auch dann von Vorteil, wenn eine dauerhafte Verbindung zwischen Verbundformkörper (A) und Kunststoffformkörper (B) durch eine Vielzahl an Schnapphaken bzw. -verbindungen, z.B. dadurch, dass die an der Oberfläche der hinterspritzten Kunststoffmaterialschicht (A2)angebrachten Hakenelemente in entsprechend geformte Aufnahme-oder Durchlassöffnungen in den Rippen eingreifen können, erzeugt wird. Eine geeignete Schnapphakenverbindung findet sich beispielsweise in der DE-A 198 35 877 beschrieben, auf die hiermit ausdrücklich Bezug genommen wird. Das Ausschäumen der Rippenzwischenräume führt in diesem Fall zu einer irreversiblen Arretierung der Schnapphakenverbindungen.

Beispielsweise aus Gründen der Gewichtsreduzierung ist es insbesondere bei großflächigen Hohlprofilverbundbauteilen in einer weiteren Ausführungsform der Erfindung möglich, in dem Kunststoffformkörper (B) insbesondere in den Rippenzwischenräumen Aussparungen, z.B. in Form von Langlöchern, vorzusehen. Darüber hinaus können diese Aussparungen auch dazu genutzt werden, Funktionselemente, z.B. Sende- und/oder Empfangseinheiten von Antennenmodulen, in das Hohlprofilverbundbauteil zu integrieren. Beispielsweise lässt sich auf diese Weise ein Fahrzeugheckdeckel mit einem Antennenmodul ausstatten.

Des weiteren können auf der Oberfläche der hinterspritzten Kunststoffmaterialschicht (A2) nicht nur ein, sondern je nach Funktion und Größe des Hohlprofilverbundbauteils auch mehrere Kunststoffformkörper (B) angebracht sein. Umgekehrt ist es gleichfalls möglich, mehrere Verbundformkörper (A) auf einem Kunststoffformkörper (B) anzubringen. Zwei oder mehr Bauteile (A) bzw. (B) können sowohl formschlüssig aneinander anliegen und/oder befestigt sein, als auch seitlich beabstandet voneinander angebracht sein.

Die vorgehend beschriebenen Rippen bzw. Stege werden in der Regel in Abhängigkeit von der Größe und dem Gewicht der zu verbindenden Bauteile (A) und (B) sowie von der Art des Rippenmaterials dimensioniert. Als geeignete Rippenbreiten haben sich Werte im Bereich von 0,5 bis 15 mm herausgestellt. Die Rippenhöhe kann ebenfalls in weiten Bereichen variieren und z.B. Werte im Bereich von 3 bis 100 mm annehmen. In einer gängigen Ausführungsform beträgt die Rippenhöhe in etwa das drei- bis zehnfache der Rippenbreite. Der Abstand der auf dem Kunststoffformkörper vorliegenden Rippen zueinander liegt vorzugsweise im Bereich der doppelten Rippenhöhe, allerdings sind auch Rippenabstände im Bereich der vierfachen Rippenhöhe und darüber durchaus praktikabel.

Anhand von Zeichnungen wird die Erfindung nachstehend näher erläutert.

Figur 1 zeigt in Draufsicht einen Verbundformkörper (A) und einen Kunststoffformkörper (B) vor dem Zusammenfügen.

Figur 2 zeigt einen Verbundformkörper (A) aus Folienschicht (A1) und Kunststoffmaterial (A2) und einen Kunststoffformkörper (B) vor dem Zusammenfügen im Querschnitt.

Figur 3 zeigt ein aus Verbundformkörper (A) und Kunststoffformkörper (B) mittels Vibrationsschweißen zusammengefügtes Hohlprofilverbundbauteil im Querschnitt.

Figur 4 zeigt in Teilen ein Hohlprofilverbundbauteil, bei dem Verbundformkörper (A) und Kunststoffformkörper (B) verklebt sind.

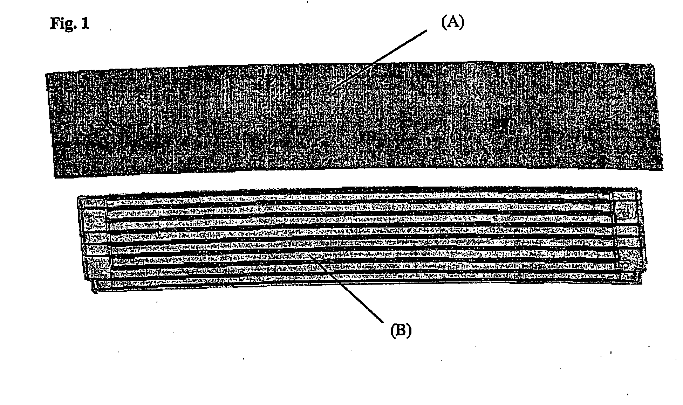

Figur 1 sind die ein Hohlprofilverbundbauteil bzw. eine Dachlamelle bildenden Bauteile (A) und (B) vor dem Zusammenfügen zu entnehmen. Bei dem Kunststoffformkörper (B) handelt es sich um ein schalenförmig ausgelegtes faserverstärktes Spritzgussteil mit acht parallelen Rippen (1). Die das Bauteil umlaufende bzw. begrenzende Rippe (2) befindet sich in etwa auf der gleichen Höhe wie die übrigen Rippen im inneren des Bauteils, so dass die Unterseite (3) des Bauteils (A), d.h. die Kunststoffmaterialschicht (A2) auf allen Rippen bzw. Wülsten zur Anlage gelangt und verschweißt oder verklebt werden kann. Man erhält ein vollständig geschlossenes Hohlprofil. Bei dem Verbundformkörper (A) handelt es sich um eine mit einem faserverstärkten Material hinterspritzte Mehrschichtfolie.

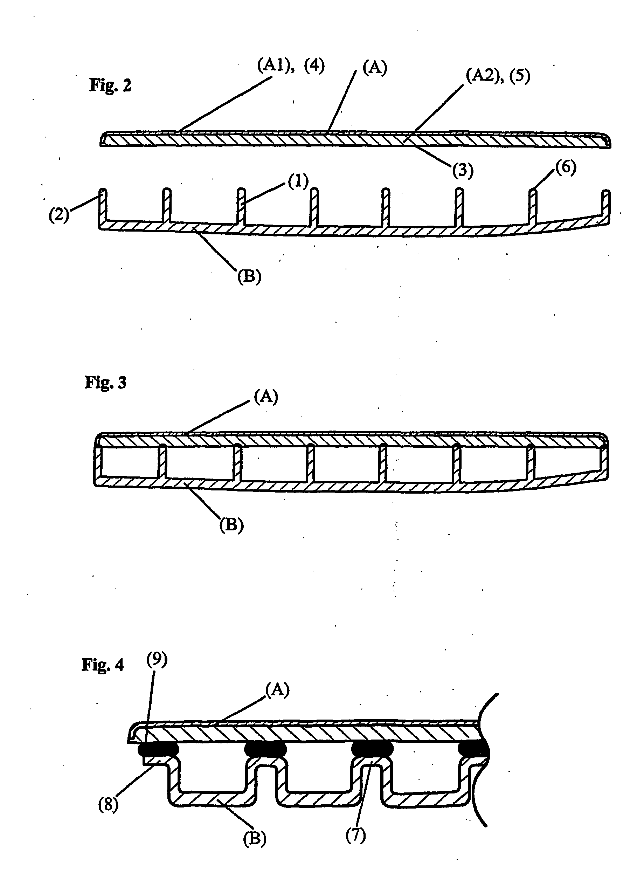

Figur 2 verdeutlicht den Verbundaufbau von Bauteil (A) aus Folie (4) und Hinterspritzmaterial (5), das auf den Rippenenden (6) des Kunststoffformkörpers (B) zur Auflage gelangt und verklebt bzw. vorzugsweise verschweißt wird (s.a. Figur 3).

Figur 4 ist eine Ausführungsform des Hohlprofilverbundbauteils, bei der die Bauteile (A) und (B) über innere (7) und äußere (8) Klebeflansche miteinander verbunden sind, im Querschnitt. Die Rippen werden in diesem Fall durch U-förmige Bögen gebildet, die gegenüber den Rippen in den Figuren 2 und 3 über verbreiterte Rippenenden, so genannte Klebeflansche verfügen. Die Klebeschicht (9) kann über die gesamte Breite des Klebeflansche (7) bzw. (8) aufgetragen werden.

Mit den erfindungsgemäßen Hohlprofilverbundbauteilen sind großflächige Kunststoffformteile zugänglich, die über ein geringes Eigengewicht verfügen, gleichzeitig jedoch mechanisch stark belastbar sind und z.B. eine hohe Steifigkeit aufweisen. Des weiteren ist die Wärmeausdehnung dieser Verbundbauteile sehr gering. Auch verziehen sich die Verbundbauteile im Fertigungsprozess sowie im Anschluss daran nicht oder nur geringfügig. Des weiteren beobachtet man bei den erfindungsgemäßen Hohlprofilverbundbauteilen im Klimatest (Teanperaturwechseltest) keine bzw. nur eine geringe reversible Verformung, diese Verbundbauteile sind also äußerst form- bzw. dimensionsstabil. Insbesondere bei reversibler Abkühlung auf Temperaturen unter 0°C wird keine oder nur noch eine sehr geringe Verformung beobachtet. Von Vorteil ist weiterhin deren sehr gute Oberflächenqualität, die regelmäßig den von der Automobilindustrie geforderten Class-A-Vorgaben entspricht, d.h. es wird ein dem Uni- oder Metallic-Lack im wesentlichen entsprechender Farb- und Qualitätseindruck erreicht. Darüber hinaus bilden sich die angeschweißten oder angeklebten Rippen nicht auf der Folienseite des Verbundbauteils ab. Schließlich sind für die erfindungsgemäßen Hohlprofilverbundbauteile nur wenige Einzelbauteile erforderlich. Zudem lassen sich Zusatzfunktionen wie Halte-und Befestigungselemente, beispielsweise über geeignete Werkzeuge, beim Spritzgießen von vornherein integrieren, zusätzliche Anformschritte entfallen. Von Vorteil ist weiterhin, dass Dekorelemente bereits bei der Herstellung der Einzelbauteile des erfindungsgemäßen Hohlprofilverbundbauteils auf einfache Weise sowohl beim Verbundformkörper (A) als auch beim Kunststoffformkörper (B) integriert werden können, so dass beispielsweise die nachträgliche Anbringung eines Dachhimmels entfallen kann.

Die beschriebenen Hohlprofilbauteile eignen sich z.B. als Dachmodule für Kraftfahrzeuge, wobei diese sowohl als großflächige einstückige Dachmodule als auch als Deckelelemente oder Dachlamellen für mehrteilige Dachmodule verwendet werden können. Bei aus mehreren Dachlamellen gebildeten Dachmodulen verlaufen diese im wesentlichen parallel zueinander. Selbstverständlich kommen die erfindungsgemäßen Hohlprofilverbundbauteile auch für weitere Karosseriebauteile wie Klappen, z.B. Serviceklappen, Kofferraum- bzw. Heckdeckel, Kühlergrills oder Motorhauben in Frage. Daneben können diese Verbundbauteile u.a. auch als Rasenmäherabdeckungen oder Türbeplankungen eingesetzt werden.

Beispiele:

Experimentell wurde das temperaturabhängige Verzugsverhalten eines erfindungsgemäßen Hohlprofilverbundbauteils anhand einer Dachlamelle untersucht.

Als Folienschicht (A1) wurde eine PMMA/PMMA/ASA-Mehrschichtfolie Senotop VP CM 1A99-08-06 der Firma Senoplast (Piesendorf, Österreich) eingesetzt.

Als Kunststoffmaterial (A2) wurde zum Hinterspritzen eine mit 30 Gew.-% an Fasern verstärkte PBT/ASA-Mischung (Ultradur®S 4090 G6; BASF AG) verwendet.

Die hinterspritzten Verbundformteile (A) wurden mit Hilfe eines Standardspritzgussverfahrens hergestellt. Dazu wurde die Folienschicht (A1) in dem Spritzgusswerkzeug positioniert und mit dem Kunststoffmaterial (A2) zu einem Verbundformkörper (A) in einer Größe von 840 x 190 x 3,7 mm hinterspritzt.

Für die Herstellung des Kunststoffformkörpers (B) wurde eine mit 20-Gew.-% an Glasfasern verstärkte PBT/ASA-Mischung (Ultradur®S 4090 G4; BASF AG) eingesetzt.

Der Kunststoffformkörper (B) wurden ebenfalls mittels Standardspritzgießtechnik hergestellt. Die Werkzeugform enthielt auf einer Seite acht (8) im wesentlichen parallel verlaufende Vertiefungen für die Ausbildung der Rippenstruktur und hatte in etwa das Aussehen des in Figur 1 wiedergegebenen Bauteils (B). Die Rippenhöhe h betrug 12 mm, die Dicke der hinterspritzten Kunststoffmaterialschicht t(A2) betrug 2,7 mm und die Dicke des Kunststoffformkörpers t (B) betrug 2,5 mm.

Der Verbundformkörper (A) und der Kunststoffformkörper (B) wurden mit einem Gerät der Firma Bielomatik, Neuffen, über die auf der Oberfläche des Kunststoffmaterials (A2) anliegenden Rippenenden des Bauteils (B) vibrationsgeschweißt.

Die erhaltenen Dachlamellen wurden an ihren regulären Befestigungspunkten an den Seitenflächen gehalten und dem folgenden Klimawechseltest unterzogen:

1. Aufheizen von 20 auf 80°C, 2. halten bei 80°C für 30 min, 3. abkühlen auf 20°C, 4. halten bei 20°C für 30 min, 5. abkühlen auf -20°C, 6. halten bei -20°C für 30 min, 7. aufwärmen auf 20°C und 8. halten bei dieser Temperatur für 30 min.

Die auf die jeweilige Temperaturänderung zurückgehende Wölbungsänderung bzw. Verformung wurde in der Bauteilmitte der Dachlamelle, und zwar an der Vorder- und an der Rückkante bestimmt. Die an der Vorderkante gemessene Verwölbungsneigung, d.h. die Höhendifferenz zwischen dem bei -20 (+20) und dem bei +80°C gemessenen Auslenkungswert lag im Bereich von 1,5 mm (1,3 mm), für die Rückkante wurde ein entsprechender Wert von 0,9 mm (0,9 mm) ermittelt.

Die gemessenen Verformungen der erfindungsgemäßen Dachlamelle waren so gering, dass auch bei Verwendung mehrerer Dachlamellen im Modulverbund keine Undichtigkeiten aufgetreten sind. Die Verformungen traten auch im Lamellenverbund, d.h. bei einem Dachlamellenmodul nicht in Erscheinung. Die erfindungsgemäßen Hohlprofilverbundbauteile zeigten zudem nach der Entnahme aus dem Formwerkzeug nur einen sehr geringen Verzug. Besonders auffällig war auch, dass die erfindungsgemäßen Hohlprofilverbundbauteile unter Kälteeinwirkung keine oder nur eine sehr geringe Verformung zeigten.

**Patentansprüche**

1.  Hohlprofilverbundbauteil, umfassend mindestens einen Verbundformkörper (A), welcher eine Folienschicht (A1) und ein hinterspritztes Kunststoffmaterial (A2) umfasst, und mindestens einen Kunststoffformkörper (B), bei dem der Kunststoffformkörper (B) über mindestens zwei Rippen oder mindestens eine umlaufende Rippe mit dem hinterspritzten Kunststoffmaterial (A2) verbunden ist, **dadurch gekennzeichnet, daß** Fasern oder Füllstoffe im Kunststoffmaterial (A2) und im Kunststoffformkörper (B) vorliegen und im wesentlichen gleichmäßig verteilt sind und der Gehalt an Fasern und Füllstoffen in Gew.-%, bezogen auf das Gesamtgewicht von hinterspritztem Kunststoffmaterial (A2) bzw. Kunststoffformkörper (B), im Kunststoffformkörper (B) geringer ist als im Kunststoffmaterial (A2).

2.  Hohlprofilverbundbauteil nach Anspruch 1, **dadurch gekennzeichnet, dass** der Gehalt an Fasern und Füllstoffen im Kunststoffformkörper (B) zumindest näherungsweise dem Wert von FG(B) gemäß Formel (I)

$$FG(B) = FG(A2) \times t(A2)/[t(A1) + t(A2)] \qquad (I)$$

entspricht, worin
FG(B) für den durchschnittlichen Faser- bzw. Füllstoffgehalt in Gew.-%, bezogen auf das Gesamtgewicht des Kunststoffformkörpers (B),
FG(A2) für den durchschnittlichen Faser- bzw. Füllstoffgehalt in Gew.-%, bezogen auf das Gesamtgewicht des hinterspritzten Kunststoffmaterials (A2),
t(A1) für die durchschnittliche Dicke der Folie (A1) im Verbundbauteil (A) und
t(A2) für die durchschnittliche Dicke der hinterspritzten Kunststoffmaterialschicht (A2) im Verbundbauteil (A) stehen.

3.  Hohlprofilverbundbauteil nach den Ansprüchen 1 bis 2, **dadurch gekennzeichnet, dass** die Folienschicht eine Mehrschichtfolie, insbesondere aus, in dieser Reihenfolge, mindestens einer Substratschicht (1), gegebenenfalls mindestens einer Zwischen- oder Dekorschicht (2), und mindestens einer transparenten Deckschicht (3) darstellt.

4.  Hohlprofilverbundbauteil nach Anspruch 3, **dadurch gekennzeichnet, dass** die Substratschicht (1) aufgebaut ist aus ASA-Polymerisaten oder einer Mischung aus ASA-Polymerisaten und Polycarbonaten, die Dekorschicht (2) aufgebaut ist aus Polymethylmethacrylat, schlagzähem Polymethylmethacrylat, Polycarbonaten, ASA-Polymerisaten oder einer Mischung aus ASA-Polymerisaten und Polycarbonaten und die Deckschicht (3) aufgebaut ist aus Polymethylmethacrylat, schlagzähem Polymethylmethacrylat, Polycarbonaten, Polyvinylidenfluorid oder deren Mischungen.

5.  Hohlprofilverbundbauteil nach den Ansprüchen 3 oder 4, **dadurch gekennzeichnet, dass** man als Kunststoffmaterialien (A2) oder als Materialien für Kunststoffformkörper (B) thermoplastische Formmassen auf der Basis von ASA-, ABS- oder SAN-Polymerisaten, Poly(meth)acrylaten, Polyethersulfonen, Polyamiden, Polybutylenterephthalat, Polycarbonaten, Polypropylen oder Polyethylen oder Mischungen enthaltend ABS-Polymerisate und Polycarbonate, ABS-Polymerisate und Polybutylenterephthalat, ABS-Polymerisate und Polyamide, ASA-Polymerisate und Polycarbonate, ASA-Polymerisate und Polybutylenterephthalat oder Polycarbonate und Polybutylenterephthalat einsetzt.

6.  Hohlprofilverbundbauteil nach den Ansprüchen 1 bis 5, **dadurch gekennzeichnet, dass** der Kunststoffformkörper (B) außenseitig ein Dekor aufweist.

7. Hohlprofilverbundbauteil nach Anspruch 6, **dadurch gekennzeichnet, dass** das Dekor eine Kunststofffolie, insbesondere eine Mehrschichtfolie, eine Textilschicht oder Leder darstellt.

8. Hohlprofilverbundbauteil nach den Ansprüchen 1 bis 7, **dadurch gekennzeichnet, dass** es ein allseitig geschlossenes Hohlprofil darstellt.

9. Verfahren zur Herstellung von Hohlprofilverbundbauteilen nach den Ansprüchen 1 bis 8, **dadurch gekennzeichnet, dass** man die Rippen des Kunststoffformkörpers (B) an die Schicht aus hinterspritztem Kunststoffmaterial (A2) des Verbundformkörpers (A) anlegt, den Verbund gegebenenfalls arretiert, und die Rippenenden mit dem Kunststoffmaterial (A2) an der Stelle der Auflagepunkte verklebt oder verschweißt.

10. Verwendung der Hohlprofilverbundbauteile gemäß den Ansprüchen 1 bis 8 als Bauteil von oder als Deckelelement oder Dachlamelle in einem Dachmodul, Motorhaube, Kofferraum oder Heckdeckel, Rasenmäherhaube, Türbeplankung, Serviceklappe oder Kühlergrill.

11. Deckelelement oder Dachlamelle in einem Dachmodul, Motorhaube, Kofferraum oder Heckdeckel, Rasenmäherhaube, Türbeplankung, Serviceklappe oder Kühlergrill enthaltend ein Hohlprofilverbundbauteil gemäß den Ansprüchen 1 bis 8.

12. Dachmodul, enthaltend mindestens zwei im wesentlichen parallel angeordnete Hohlprofilverbundbauteile gemäß den Ansprüchen 1 bis 8.

**Claims**

1. A hollow-profile composite component comprising at least one composite molding (A) which comprises a film layer (A1) and comprises a plastic material (A2) applied by in-mold coating, and comprising at least one plastic molding (B), where the plastic molding (B) has been bonded by way of two ribs or at least one peripheral rib to the plastic material (A2) applied by in-mold coating, wherein fibers or fillers are present in the plastic material (A2) and in the plastic molding (B) and have substantively uniform distribution, and the contents of fibers and fillers in % by weight, based on the total weight of plastic material (A2) applied by in-mold coating and, respectively, plastic molding (B) is lower in the plastic molding (B) than in the plastic material (A2).

2. The hollow-profile composite component according to claim 1, wherein the content of fibers and fillers in the plastic molding (B) has at least approximately the value of FG(B) in formula (I)

$$FG(B) = FG(A2) \times t(A2)/[t(A1) + t(A2)] \qquad (I)$$

where
FG(B) is the average content of fibers or fillers in % by weight, based on the total weight of the plastic molding (B),
FG(A2) is the average content of fiber or filler in % by weight, based on the total weight of the plastic material (A2) applied by in-mold coating,
t(A1) is the average thickness of the film (A1) in the composite molding (A), and
t(A2) is the average thickness of the plastic material layer (A2) applied by in-mold coating in the composite component (A).

3. The hollow-profile composite component according to either of claims 1 and 2, wherein the film layer is a multilayer film in particular made from, in this sequence, at least one substrate layer (1), at least one intermediate or decorative layer (2) if appropriate, and at least one transparent outer layer (3).

4. The hollow-profile composite component according to claim 3, wherein the substrate layer (1) is composed of ASA polymers or of a mixture made from ASA polymers and polycarbonates, and the decorative layer (2) is composed of polymethyl methacrylate, impact-modified polymethyl methacrylate, polycarbonates, ASA polymers, or a mixture made from ASA polymers and polycarbonates, and the outer layer (3) is composed of polymethyl methacrylate, impact-modified polymethyl methacrylate, polycarbonates, polyvinylidene fluoride, or a mixture of these.

**5.** The hollow-profile composite component according to claim 3 or 4, wherein the plastic materials (A2) used or the materials used for plastic molding (B) comprise thermoplastic molding compositions based on ASA polymers, on ABS polymers, on SAN polymers, on poly(meth)acrylates, on polyether sulfones, on polyamides, on polybutylene terephthalate, on polycarbonates, on polypropylene, on polyethylene, or on a mixture comprising ABS polymers and polycarbonates, ABS polymers and polybutylene terephthalate, ABS polymers and polyamides, ASA polymers and polycarbonates, ASA polymers and polybutylene terephthalate, or polycarbonates and polybutylene terephthalate.

**6.** The hollow-profile composite component according to any of claims 1 to 5, wherein the plastic molding (B) has a decorative material on its outer side.

**7.** The hollow-profile composite component according to claim 6, wherein the decorative material is a plastic film, in particular a multilayer film, a textile layer, or leather.

**8.** The hollow-profile composite component according to any of claims 1 to 7, which is a hollow profile closed on every side.

**9.** A process for producing hollow-profile composite components according to any of claims 1 to 8, which comprises bringing the ribs of the plastic molding (B) into contact with the layer made from plastic material (A2) applied by in-mold coating and present in the composite molding (A), molding the composite if appropriate, and adhesive-bonding or welding the rib edges to the plastic material (A2) at the contact sites.

**10.** The use of the hollow-profile composite component according to any of claims 1 to 8 as a component of, or as, a headlining unit or roof segment in a roof module, engine hood, vehicle trunk, or hatchback door, lawn-mower hood, door panel, servicing flap, or radiator grille.

**11.** A headlining unit or roof segment in a roof module, engine hood, vehicle trunk, or hatchback door, lawn-mower hood, door panel, servicing flap, or radiator grille comprising a hollow-profile composite component according to any of claims 1 to 8.

**12.** A roof module comprising at least two hollow-profile composite components according to any of claims 1 to 8, arranged substantively parallel.


**Revendications**

**1.** Composant composite profilé creux comprenant au moins un corps moulé composite (A) qui comprend une couche de feuilles (A1) et un matériau plastique surmoulé par injection (A2) et au moins un corps moulé en plastique (B), le corps moulé en plastique (B) étant relié par l'intermédiaire d'au moins deux nervures ou d'au moins une nervure périphérique avec le matériau plastique surmoulé par injection (A2), **caractérisé en ce que** les fibres ou charges sont présentes dans le matériau plastique (A2) et dans le corps moulé en plastique (B) et sont réparties de manière essentiellement uniforme et la teneur en fibres et charges en % en poids, par rapport au poids total du matériau plastique surmoulé par injection (A2) ou du corps moulé en plastique (B), est inférieure dans le corps moulé en plastique à celle du matériau plastique (A2).

**2.** Composant composite profilé creux selon la revendication 1, **caractérisé en ce que** la teneur en fibres et charges dans le corps moulé en plastique (B) s'élève, du moins approximativement, à la valeur de FG(B) selon la formule (I)

$$FG(B) = FG(A2) \times t(A2) / [t(A1) + t(A2)] \qquad (I)$$

dans laquelle
FG(B) représente la teneur moyenne en fibres ou charges en % en poids par rapport au poids total du corps moulé en plastique (B);
FG(A2) représente la teneur moyenne en fibres ou charges en % en poids par rapport au poids total du matériau plastique surmoulé par injection (A2);

t(A1) représente l'épaisseur moyenne de la feuille (A1) dans le composant composite (A) et

t(A2) représente l'épaisseur moyenne de la couche de matériau plastique surmoulé par injection (A2) dans le composant composite (A).

3. Composant composite profilé creux selon l'une des revendications 1 à 2, **caractérisé en ce que** la couche de feuilles est une feuille en plusieurs couches, composée en particulier, dans cet ordre, d'au moins une couche de substrat (1), éventuellement d'au moins une couche intermédiaire ou couche de décor (2) et d'au moins une couche de couverture transparente (3).

4. Composant composite profilé creux selon la revendication 3, **caractérisé en ce que** la couche de substrat (1) est composée de polymérisats ASA ou d'un mélange de polymérisats ASA et de polycarbonates, la couche de décor (2) est composée de polyméthylméthacrylate, de polyméthylméthacrylate résilient, de polycarbonates, de polymérisats ASA ou d'un mélange de polymérisats ASA et de polycarbonates et la couche de couverture (3) est composée de polyméthylméthacrylate, de polyméthylméthacrylate résilient, de polycarbonates, de fluorure de polyvinylidène ou leurs mélanges.

5. Composant composite profilé creux selon l'une des revendications 3 ou 4, **caractérisé en ce que** l'on utilise comme matériaux plastiques (A2) ou comme matériaux pour des corps moulés en plastique (B) des masses moulées thermoplastiques à base de polymérisats ASA, ABS ou SAN, de poly(méth)acrylates, de polyéthersulfones, de polyamides, de téréphtalate de polybutylène, de polycarbonates, de polypropylène ou de polyéthylène ou des mélanges contenant des polymérisats ABS et des polycarbonates, des polymérisats ABS et du téréphtalate de polybutylène, des polymérisats ABS et des polyamides, des polymérisats ASA et des polycarbonates, des polymérisats ASA et du téréphtalate de polybutylène ou des polycarbonates et du téréphtalate de polybutylène.

6. Composant composite profilé creux selon l'une des revendications 1 à 5, **caractérisé en ce que** le corps moulé en plastique (B) présente un décor côté extérieur.

7. Composant composite profilé creux selon la revendication 6, **caractérisé en ce que** le décor représente une feuille en plastique, en particulier une feuille à plusieurs couches, une couche textile ou du cuir.

8. Composant composite profilé creux selon l'une des revendications 1 à 7, **caractérisé en ce qu'**il représente un profilé creux fermé de toutes parts.

9. Procédé de préparation de composants composites profilés creux selon l'une des revendications 1 à 8, **caractérisé en ce que** l'on applique les nervures du corps moulé en plastique (B) sur la couche de matériau plastique surmoulé par injection (A2) du corps moulé composite (A), l'on arrête éventuellement la jonction et l'on colle ou soude les extrémités des nervures avec le matériau plastique (A2) à l'endroit des points d'application.

10. Utilisation des composants composites profilés creux selon l'une des revendications 1 à 8 comme composant ou comme élément de couvercle ou lamelle de toit dans un module de toiture, un capot de moteur, un coffre, un hayon arrière, un capot de tondeuse à gazon, un parement de porte, un clapet de service ou une grille de radiateur.

11. Elément de couvercle ou lamelle de toit dans un module de toiture, un capot de moteur, un coffre, un hayon arrière, un capot de tondeuse à gazon, un parement de porte, un clapet de service ou une grille de radiateur contenant un composant composite profilé creux conforme aux revendications 1 à 8.

12. Module de toiture contenant au moins deux composants composites profilés creux disposés de manière essentiellement parallèle conformément aux revendications 1 à 8.

Fig. 1

(A)

(B)

Fig. 2

Fig. 3

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19512260 A
- DE 10001964 A
- DE 1655527 A
- DE 19716390 A
- DE 19756021 A
- DE 19803597 A
- JP 06278660 A
- WO 0063015 A
- EP 0225500 A2
- WO 0100382 A
- WO 9717189 A
- DE 19835877 A

**In der Beschreibung aufgeführte Nicht-Patentliteratur**

- **S.A. KUNSTSTOFF-HANDBUCH.** Polyurethane. Carl Hanser Verlag, 1983, vol. 7, 31-39
- **M. STICKLER ; T. RHEIN.** Ullmann's encyclopedia of industrial chemistry. VCH Publishers Weinheim, 1992, vol. A21, 473-486
- **H. DOMININGHAUS.** Die Kunststoffe und ihre Eigenschaften. VDI-Verlag Düsseldorf, 1992
- **S.A. E. BÜRKLE ; G. REHM ; P. EYERER.** Hinterspritzen und Hinterpressen. *Kunststoffe,* 1996, vol. 86 (3), 298-307